# EUROPÄISCHE PATENTSCHRIFT

(11) **EP 4 111 085 B1**
(45) Veröffentlichungstag und Bekanntmachung des Hinweises auf die Patenterteilung: **11.12.2024**
(21) Anmeldenummer: 21706177.9
(22) Anmeldetag: 04.02.2021
(51) Int. Cl.: F16L 37/252, F16L 43/00

(54) **VORRICHTUNG ZUM KODIEREN EINES ERSTEN VERBINDUNGSPARTNERS UND EINES ZWEITEN VERBINDUNGSPARTNERS EINES BAJONETTVERSCHLUSSES UND VORRICHTUNGSSATZ**
DEVICE FOR CODING A FIRST CONNECTION PARTNER AND A SECOND CONNECTION PARTNER OF A BAYONET LOCK, AND DEVICE SET
DISPOSITIF DE CODAGE D'UN PREMIER PARTENAIRE DE CONNEXION ET D'UN SECOND PARTENAIRE DE CONNEXION D'UN VERROU À BAÏONNETTE, ET ENSEMBLE DE DISPOSITIFS

(30) Priorität: 28.02.2020 DE 102020105395
(43) Veröffentlichungstag der Anmeldung: 04.01.2023
(73) Patentinhaber: NORMA Germany GmbH, 63477 Maintal (DE)
(72) Erfinder: JACKSTEIT, Bruno, 63477 Maintal (DE)
(74) Vertreter: Patentanwälte Olbricht Buchhold Keulertz
(86) Internationale Anmeldenummer: PCT/EP2021/052644
(87) Internationale Veröffentlichungsnummer: WO 2021/170363

(56) Entgegenhaltungen:
- WO-A1-2009/024807
- DE-A1- 102013 018 639
- DE-A1- 102016 223 355
- US-A- 4 449 737
- US-A1- 2016 245 443

## Beschreibung

Die Erfindung betrifft eine Vorrichtung zum Kodieren eines ersten Verbindungspartners und eines zweiten Verbindungspartners eines Bajonettverschlusses und einen Vorrichtungssatz.

Zum Transport von Fluiden zwischen verschiedenen Behältern in Vorrichtung, zum Beispiel Kühlaggregaten, werden Fluidleitungen verwendet. Diese Fluidleitungen können dabei mittels Fluidleitungsadaptern zum Beispiel an Verteilerplatten angeschlossen werden, die das über die Fluidleitung zugeführte Fluid verschiedenen und gegebenenfalls einer Mehrzahl von weiteren Fluidleitungen zuführen. Wenn eine Vielzahl von Fluidleitungen verwendet wird, dürfen diese nicht verwechselt werden, um die Funktion der Vorrichtung zu erhalten und um Beschädigungen zu vermeiden.

Dazu können die Fluidleitungen und die entsprechenden Aufnahmen der Fluidleitungen mit Zeichen kodiert werden, die eine Fluidleitung einer Aufnahme zuordnen. Ein Benutzer muss demnach vor dem Montieren der Fluidleitungen die Zeichen auf der Fluidleitung den entsprechenden Zeichen auf den Aufnahmen der Fluidleitungen zuordnen.

Ferner werden im Stand der Technik Verbindungsvorrichtungen bzw. Kupplungsvorrichtungen für derartige Fluidleitungen vorgeschlagen, welche eine manuelle, händische Betätigung bei der Aufnahme oder beim Lösen eines Verbindungspartners erfordern. Dies verschlechtert die Effektivität der Handhabung der Vorrichtung. So offenbart beispielsweise US 4 449 737 A1 eine Schlauch- bzw. Leitungskupplungsvorrichtung mit einem Bajonettverschluss und einem ersten und zweiten Verbindungspartner. Die Vorrichtung wird dabei bei einem Staubsauger oder dergleichen eingesetzt. Der erste Verbindungspartner 14 weist dabei wenigstens zwei Verriegelungsarme auf und ist an einem Fluidleitungsadapter angeordnet. Die Verriegelungsarme werden in Ausnehmungen des zweiten Verbindungspartners eingeführt.

Aufgabe der Erfindung ist es daher, eine verbesserte Vorrichtung zum Kodieren der Leitungen bereitzustellen, die effektiver handhabbar ist.

Hauptmerkmale der Erfindung sind in den Ansprüchen 1 und 5 angegeben. Ausgestaltungen sind Gegenstand der Ansprüche 2 bis 4 sowie 6 und 7.

Bei einer Vorrichtung zum Kodieren eines ersten Verbindungspartners und eines zweiten Verbindungspartners eines Bajonettverschlusses, wobei die Vorrichtung einen Bajonettverschluss mit einem ersten Verbindungspartner und einem zweiten Verbindungspartner umfasst, wobei der erste Verbindungspartner mindestens zwei Verriegelungsarme zum Verriegeln der Verbindung aufweist und an einem Fluidleitungsadapter angeordnet ist und wobei der zweite Verbindungspartner einen Flanschring zum Durchführen des ersten Verriegelungspartners mit einer der Anzahl der Verriegelungsarmen entsprechenden Anzahl an Ausnehmungen zum Durchführen der Verriegelungsarme aufweist und an einer Adapteraufnahme angeordnet ist, wobei ein erster Verriegelungsarm eine andere Geometrie als die weiteren Verriegelungsarme aufweist, wobei eine dem ersten Verriegelungsarm zugeordnete erste Ausnehmung eine dazu passende Geometrie zum Positionieren des ersten Verbindungspartners und des zweiten Verbindungspartners in einer vordefinierten Position aufweist, und die weiteren Ausnehmungen eine andere, nicht zu dem ersten Verriegelungsarm passende Geometrie aufweisen, und wobei die Vorrichtung weiter eine mechanische Kodierungseinrichtung aufweist, wobei die Kodierungseinrichtung einen ersten Kodierungspartner an dem ersten Verbindungspartner und einen zweiten Kodierungspartner an dem zweiten Verbindungspartner aufweist, wobei der erste Kodierungspartner und der zweite Kodierungspartner zueinander passend ausgerichtet sind, wenn der erste Verbindungspartner und der zweite Verbindungspartner in einer vordefinierten Position zueinander angeordnet sind und eine Verbindung über den Bajonettverschluss bewirkt wird, wobei der erste Kodierungspartner ein Vorsprung ist und der zweite Kodierungspartner eine dem Vorsprung zugeordnete Führung ist, ist erfindungsgemäß vorgesehen, dass der Vorsprung sich in einer radialen Richtung des Fluidleitungsadapters von dem ersten Verbindungspartner weg erstreckt, wobei der zweite Verbindungspartner einen sich in einer Umfangsrichtung der Adapteraufnahme erstreckenden Rand aufweist, der die Führung für den Vorsprung aufweist, wobei die Führung sich in Umfangsrichtung erstreckt.

Bei der erfindungsgemäßen Vorrichtung kann mittels der mechanischen Kodierungseinrichtung eine eindeutige Zuordnung zwischen dem ersten Verbindungspartner und dem zweiten Verbindungspartner eines Bajonettverschlusses bereitgestellt werden, der einen Fluidleitungsadapter mit einer Adapteraufnahme verbindet. Der Bajonettverschluss weist dabei mindestens zwei Verriegelungsarme auf, die an dem ersten Verbindungspartner angeordnet sind. Weiter umfasst der Bajonettverschluss an dem zweiten Verbindungspartner einen Flanschring, der Ausnehmungen aufweist. Die Anzahl der Ausnehmungen ist dabei gleich der Anzahl der Verriegelungsarme. Die Verriegelungsarme sind entlang einer axialen Richtung der Vorrichtung gesehen, sternförmig um ein Endstück des Fluidleitungsadapters angeordnet. Gleiches gilt für die Ausnehmungen am Flanschring, der einen inneren Ringdurchmesser aufweist, der ein Durchführen des Endstücks des Fluidleitungsadapters erlaubt. An der Position der Ausnehmungen ist der innere Ringdurchmesser des Flanschrings vergrößert, wobei die Verriegelungsarme an der Position der Ausnehmungen durch den Flanschring geführt werden können. Zum Verbinden des Bajonettverschlusses wird der erste Verbindungspartner mit dem zweiten Verbindungspartner verbunden, wobei die Verriegelungsarme durch die Ausnehmungen des Flanschrings geführt werden. Da die Verriegelungsarme und die Ausnehmungen auf Grund ihrer Geometrien eine Positionierung der Verbindungspartner zueinander bewirken, können der erste und zweite Verbindungspartner lediglich in einer vordefinierten Position miteinander verbunden werden. Weiter umfasst die mechanische Kodierungseinrichtung einen ersten Kodierungspartner, der mit einem zweiten Kodierungspartner mechanisch zusammenwirkt, in dem die beiden Kodierungspartner passend zu einander ausgebildet sind. Mittels der mechanischen Kodierungseinrichtung wird eine automatische Zuordnung zwischen dem ersten Verbindungspartner und zweiten Verbindungspartner beim Verbinden des Bajonettverschlusses bewirkt. Ein erster Verbindungspartner, der nicht einem zweiten Verbindungspartner zugeordnet sein soll, weist einen ersten Kodierungspartner auf, der nicht zu dem zweiten Kodierungspartner passend ausgerichtet ist. Eine Verbindung zwischen dem ersten Verbindungspartner den zweiten Verbindungspartner ist aufgrund der in diesem Fall inkompatiblen ersten und zweiten Kodierungspartner nicht möglich, da die Verbindungspartner lediglich in der vordefinierten Position zueinander ausgerichtet werden können. Wenn der erste Verbindungspartner dem zweiten Verbindungspartner zugeordnet werden soll, weist der erste Verbindungspartner einen ersten Kodierungspartner auf, der in der vordefinierten Position zu dem zweiten Kodierungspartner passend ausgerichtet.

Alternativ oder zusätzlich kann die erste Ausnehmung beispielsweise eine von der Standardgeometrie der Ausnehmungen abweichende Geometrie aufweisen, wobei der entsprechende erste Verriegelungsarm eine passende komplementäre Geometrie aufweist. Dabei kann zum Beispiel entweder lediglich der entsprechende Verriegelungsarm durch diese Ausnehmung durchgeführt werden. Alternativ kann der entsprechende Verriegelungsarm durch keine der anderen Ausnehmungen geführt werden. Damit wird in Kombination mit der mechanischen Kodierungseinrichtung ohne großen Aufwand eine mechanische Zuordnung zwischen den beiden Verbindungspartnern bewirkt.

Ein Benutzer muss dabei nicht mehr ein Zeichen entziffern und mit einem anderen Zeichen in Verbindung bringen, wenn er den Fluidleitungsadapter der entsprechenden Aufnahme zuordnen möchte. Damit wird eine fehlerhafte Zuordnung der Fluidleitungen, die an die Fluidleitungsadapter angeschlossen sind, und der Adapteraufnahmen vermieden. Dies erhöht die Effektivität der Handhabung der Vorrichtung.

Beispielgemäß kann der erste Verriegelungsarm in einer Umfangsrichtung des Bajonettverschlusses eine größere Erstreckung aufweisen als die weiteren Verriegelungsarme, wobei die erste Ausnehmung eine dazu passende Erstreckung in Umfangsrichtung aufweist und die weiteren Ausnehmungen in Umfangsrichtung eine geringere, nicht zu dem ersten Verrieglungsarm passende Erstreckung aufweisen.

In diesem Beispiel umfasst einer der Verriegelungsarme, nämlich der erste Verriegelungsarm, in Umfangsrichtung eine größere Erstreckung als die anderen Verriegelungsarme und kann daher nicht durch die Ausnehmungen, die zu den weiteren Verriegelungsarmen passen, durchgeführt werden. Der erste Verriegelungsarm ist dafür zu groß. Damit kann der erste Verbindungspartner lediglich in einer Stellung, in der der erste Verriegelungsarm mit der ersten Ausnehmung fluchtet, mit dem zweiten Verbindungspartner verbunden werden, um den Bajonettverschluss zu verriegeln. Damit wird zum einen der erste Verbindungspartner dem zweiten Verbindungspartner zugeordnet. Zum anderen wird damit ohne großen Aufwand eine vordefinierte Positionierung der beiden Verbindungspartner zueinander bewirkt.

Weiter ist der erste Kodierungspartner erfindungsgemäß ein Vorsprung, wobei der zweite Kodierungspartner eine Ausnehmung sein kann.

Der Vorsprung passt dabei zu der Ausnehmung, d.h. der Vorsprung kann in die Ausnehmung eingeführt und darin bewegt werden, wenn der Bajonettverschluss verriegelt werden soll. Der Vorsprung kann nur in einer vordefinierten Position des ersten Verbindungspartners zum zweiten Verbindungspartner in die Ausnehmung eingeführt werden. Damit wird der erste Verbindungspartner dem zweiten Verbindungspartner zugeordnet.

Erfindungsgemäß erstreckt sich der Vorsprung in einer radialen Richtung des Fluidleitungsadapters von dem ersten Verbindungspartner weg, wobei der zweite Verbindungspartner einen sich in einer Umfangsrichtung der Adapteraufnahme erstreckenden Rand aufweist, der eine sich in Umfangsrichtung erstreckende Führung für den Vorsprung aufweist.

Der Vorsprung steht dabei in radialer Richtung nach außen hin von dem ersten Verbindungspartner und damit von dem Fluidleitungsadapter ab. Der Rand umschließt dabei den ersten Verbindungspartner, wenn der erste Verbindungspartner an dem zweiten Verbindungspartner angeordnet und mit ihm verbunden ist. Der Vorsprung kann dabei in die Führung angeordnet werden und in Umfangsrichtung entlang der Führung bewegt werden, wenn der Bajonettverschluss verriegelt wird.

In einem alternativen Beispiel kann der der Vorsprung sich in einer axialen Richtung des Fluidleitungsadapters von dem Fluidleitungsadapter weg erstrecken, wobei der zweite Verbindungspartner eine sich in einer Umfangsrichtung der Adapteraufnahme erstreckende Führung für den Vorsprung aufweist.

In diesem Beispiel ist der Vorsprung bei einer Verbindung des ersten Verbindungspartners mit dem zweiten Verbindungspartner in einer innerhalb der Adapteraufnahme angeordneten Führung angeordnet. Beim Verschließen des Bajonettverschlusses lässt sich der Vorsprung entlang der Führung in Umfangsrichtung bewegen.

Dabei kann der zweite Kodierungspartner zum Beispiel ein Anschlagselement aufweisen, das in einer Verriegelungsstellung der Vorrichtung in einer Umfangsrichtung einen Formschluss mit dem Vorsprung bildet.

Über den Anschlag wird einem Benutzer angezeigt, dass der erste Verbindungspartner und der zweite Verbindungspartner in der korrekten Position montiert und verriegelt sind.

Gemäß einem weiteren Beispiel kann der erste Verbindungspartner drei Verriegelungsarme aufweisen.

Damit sei jedoch nicht ausgeschlossen, dass der erste Verbindungspartner eine größere oder kleinere Anzahl an Verriegelungsarmen aufweisen kann. Weiter umfasst der zweite Verbindungspartner demnach drei Ausnehmungen, durch die die Verriegelungsarme durchgeführt werden können.

Weiter betrifft die Erfindung einen Vorrichtungssatz umfassend eine Vielzahl von Vorrichtungen nach der vorhergehenden Beschreibung, wobei jede der Vielzahl von Vorrichtungen eine Kodierungseinrichtung aufweist, die sich zur eindeutigen Identifizierung einer Vorrichtung von den Kodierungseinrichtungen der anderen der Vielzahl von Vorrichtungen unterscheidet.

Mittels der sich unterscheidenden Kodierungseinrichtungen der einzelnen Vorrichtungen aus dem Vorrichtungssatz weisen die einzelnen Vorrichtungen erste Verbindungspartner und zweite Verbindungspartner auf, die nicht miteinander verwendet werden können, wenn sie von verschiedenen Vorrichtungen stammen. Damit kann eine Verwechslungsgefahr zwischen den einzelnen Vorrichtungen der Vielzahl von Vorrichtungen vermieden werden. Weiter wird beim Montieren der einzelnen Vorrichtungen eine automatische Identifikation der korrekten Paarung zwischen dem ersten Verbindungspartner und dem zweiten Verbindungspartner durch die Ermöglichung der Verbindung zwischen dem ersten Verbindungspartner und dem zweiten Verbindungspartner bereitgestellt.

In einem Beispiel kann, wenn die Fluidleitungsadapter der Vielzahl von Vorrichtungen jeweils eine Fluidleitungskrümmung aufweisen, jede der Vielzahl von Vorrichtungen eine eigene Winkelbeziehung zwischen der jeweiligen Kodierungseinrichtung und der jeweiligen Fluidleitungskrümmung aufweisen.

Da die Fluidleitungskrümmung in der Montagesituation in eine bestimmte Richtung weisen muss, bewirkt die der jeweiligen Vorrichtung eigene Winkelbeziehung zwischen der Kodierungseinrichtung und der Fluidleitungskrümmung eine korrekte Positionierung der Fluidleitungskrümmung des Fluidleitungsadapters, bei der Verbindung zwischen dem ersten Verbindungspartner der zweiten Verbindungspartner. Dies vereinfacht die Montage der Vorrichtung bzw. des Fluidleitungsadapters an der Adapteraufnahme.

Gemäß einem weiteren Beispiel können der erste Kodierungspartner einer der Vielzahl von Vorrichtungen und der zweite Kodierungspartner einer anderen der Vielzahl von Vorrichtungen inkompatibel sein.

Durch die Inkompatibilität zwischen dem ersten Kodierungspartner einer der Vielzahl von Vorrichtung und dem zweiten Kodierungspartner einer anderen der Vielzahl von Vorrichtungen wird eine Verwechslung der Verbindungspartner verschiedener Vorrichtungen des Vorrichtungssatzes vermieden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Vorrichtung in einer ersten Ansicht entlang einer axialen Richtung;
- Fig. 2a, b: eine schematische Darstellung des Fluidleitungsadapters mit dem ersten Verbindungspartner und der Adapteraufnahme mit dem zweiten Verbindungspartner;
- Fig. 3: eine schematische Darstellung einer weiteren Ansicht der Vorrichtung in einer zweiten Ansicht;
- Fig. 4a, b: eine schematische Darstellung des Fluidleitungsadapters mit dem ersten Verbindungspartner und der Adapteraufnahme mit dem zweiten Verbindungspartner gemäß der weiteren Ausführungsform;
- Fig. 5a, b,: eine schematische Darstellung eines weiteren alternativen und nicht erfindungsgemäßen Beispiels der Vorrichtung;
- Fig. 6a, b: schematische Darstellungen von Vorrichtungen eines Vorrichtungssatzes; und
- Fig. 7: eine schematische Darstellung eines Systems umfassend eine Verteilerplatte und Fluidleitungen, die mit der Vorrichtung verbunden werden.

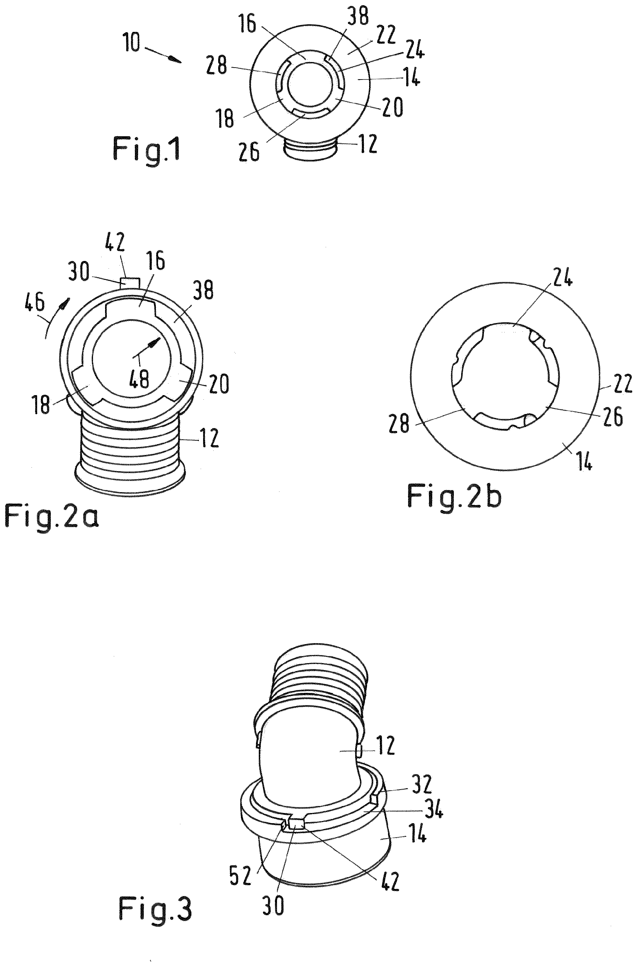

Die Gesamtheit der erfindungsgemäßen Vorrichtung wird wie in Figur 1 dargestellt mit dem Bezugszeichen 10 referenziert.

Die Vorrichtung 10 umfasst dabei einen Fluidleitungsadapter, der einen ersten Verbindungspartner 12 aufweist, und eine Adapteraufnahme, die einen zweiten Verbindungspartner 14 aufweist. Der erste Verbindungspartner 12 und der zweite Verbindungspartner 14 können miteinander verbunden werden, um den Fluidleitungsadapter mit der Adapteraufnahme zu verbinden. Dieser Montagezustand ist in Figur 1 dargestellt.

Wie in Figur 2a dargestellt, umfasst der erste Verbindungspartner 12 mindestens zwei Verriegelungsarme 16, 18, 20, die sternförmig in einem Endstück des Fluidleitungsadapters angeordnet sind. Die Verriegelungsarme 16, 18, 20 erstrecken sich dabei in einer radialen Richtung 48 des Fluidleitungsadapters und weisen von dem Fluidleitungsadapter weg. In diesem Beispiel sind drei Verriegelungsarme 16, 18, 20 vorhanden.

Weiter erstrecken sich die Verriegelungsarme 16, 18, 20 entlang einer Umfangsrichtung 46 des Fluidleitungsadapters. In diesem Beispiel ist die Erstreckung des Verriegelungsarms 16 in Umfangsrichtung 46 größer als die Erstreckung der anderen Verriegelungsarme 18, 20. Der Verriegelungsarm 16 kann als erster Verriegelungsarm 16 bezeichnet werden.

Gemäß Figur 2b weist der zweite Verbindungspartner 14 einen Flanschring 22 auf. Der Flanschring 22 weist entlang seines inneren Umfangs Ausnehmungen 24, 26, 28 auf, die passend zu den Verriegelungsarm und 16, 18, 20 ausgebildet sind. D.h., dass die Verriegelungsarme 16, 18, 20 zumindest durch eine der Ausnehmungen 24, 26, 28 durchgeführt werden können, wenn sie mit ihnen fluchten. Dabei weisen die Ausnehmungen 26 und 28 jedoch eine geringere Erstreckung in Umfangsrichtung 46 auf als der erste Verriegelungsarm 16. Der erste Verriegelungsarm 16 kann damit nicht durch die Ausnehmungen 26 und 28 durchgeführt werden. Lediglich die Ausnehmung 24, die als erste Ausnehmung 24 bezeichnet werden kann, weist eine Geometrie in Umfangsrichtung 46 auf, die ein Hindurchführen des ersten Verriegelungsarms 16 erlaubt. Der erste Verriegelungsarm 16 kann daher lediglich durch die erste Ausnehmung 24 durchgeführt werden. Eine Verbindung zwischen dem ersten Verbindungspartner 12 und dem zweiten Verbindungspartner 14 ist daher lediglich in einer vordefinierten Position möglich.

Der Fluidleitungsadapter kann weiter ein Dichtelement 38 in Form eines O-Ringes aufweisen. Das Dichtelement 38 dichtet eine Verbindung zwischen dem ersten Verbindungspartner 12 und dem zweiten Verbindungspartner 14 ab, wenn die Verriegelungsarme 16, 18, 20 durch die Ausnehmungen 24, 26, 28 durchgeführt wurden.

Figur 3 zeigt eine weitere Ansicht der Vorrichtung 10. Die mechanische Kodierungseinrichtung umfasst als ersten Kodierungspartner 42 in diesem Beispiel einen Vorsprung 30, der sich in radialer Richtung von dem ersten Verbindungspartner 12 weg erstreckt.

Die Adapteraufnahme, die als zweiter Verbindungspartner 14 fungiert, umfasst eine Führung 34, die an einem Rand 32 angeordnet ist, und als zweiter Markierungspartner 44 fungiert. Die Führung 34 kann als Ausnehmung des Randes 32 entlang der Umfangsrichtung ausgebildet sein.

Weiter umfasst der zweite Verbindungspartner 14 einen Anschlag 52, an dem in einer Montageposition der Vorrichtung 10 der Vorsprung 30 durch Formschluss an einer weiteren Drehung Umfangsrichtung gehindert wird. Wenn der Vorsprung 30 an dem Anschlag 52 angeordnet ist, wird damit angezeigt, dass eine korrekte Verbindung zwischen dem ersten Verbindungspartner 12 und dem zweiten Verbindungspartner 14 hergestellt wurde. Ein Benutzer kann anhand des Vorsprungs 30 erkennen, ob der erste Verbindungspartner 12 und der zweite Verbindungspartner 14 ordnungsgemäß miteinander verbunden wurden und verriegelt sind.

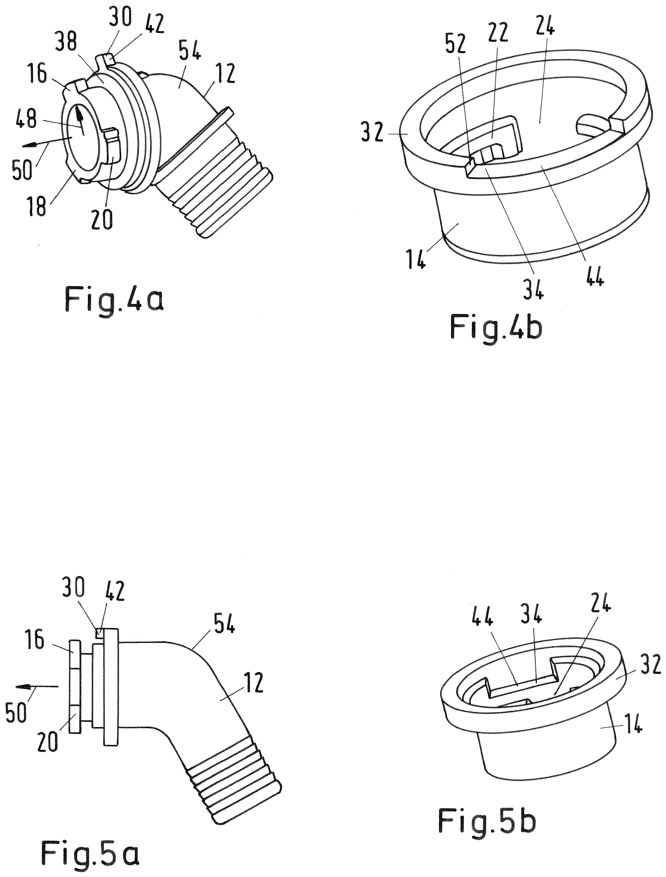

Figur 4a zeigt den ersten Verbindungspartner 12 dieses Beispiels aus einer anderen Ansicht. Der erste Verbindungspartner 12 umfasst dabei ebenfalls drei Verriegelungsarme 16, 18, 20. Der Vorsprung 30 ist in axialer Richtung 50 von dem Endstück des Fluidleitungsadapters beabstandet angeordnet. Zwischen dem Vorsprung 30 und den Verriegelungsarmen 16, 18, 20 ist das Dichtelement 38 angeordnet.

Der Fluidleitungsadapter weist weiter eine Fluidleitungskrümmung 54 auf, sodass die beiden Endstücke des Fluidleitungsadapters in einem Winkel zueinander angeordnet sind. Der Vorsprung 30 ist dabei zwischen der Fluidleitungskrümmung 54 und den Verriegelungsarmen 16, 18, 20 angeordnet.

Dabei weist der Verbindungspartner 12 zwischen dem Vorsprung 30, der als erster Kodierungspartner 42 fungiert und der Fluidleitungskrümmung 54 eine vordefinierte Winkelbeziehung auf. Diese Winkelbeziehung legt dabei in Bezug auf die Adapteraufnahme, an der der zweite Verbindungspartner 14 angeordnet ist, fest, in welche Richtung die Fluidleitungskrümmung 54 nach der Montage verläuft.

Dabei ist in Figur 4b die Adapteraufnahme dieses Beispiels dargestellt. Die Adapteraufnahme, die als zweite Verbindungspartner 14 fungiert, umfasst ebenfalls einen Flanschring 22 mit Ausnehmungen 24, 26, 28. Sichtbar ist in dieser Figur lediglich die Ausnehmung 24. Durch das Zusammenwirken des ersten Kodierungspartners 42 und des zweiten Kodierungspartners 44, der als Führung 34 an dem Rand 32 ausgebildet ist, mit der vordefinierten Position, die durch die Verriegelungsarme 16, 18 20 und den Ausnehmungen 24, 26, 28 bewirkt wird eine feste Zuordnung zwischen den Verbindungspartnern 12, 14 bereitgestellt. Damit wird ebenfalls die Richtung der Fluidleitungskrümmung 34 in der Montageposition in Bezug auf die Adapteraufnahme festgelegt.

Gemäß einem weiteren alternativen Beispiel der Vorrichtung 10 nach den Figuren 5a und 5b kann der Vorsprung 30 auch in axialer Richtung 50 ausgerichtet sein. Dies ist in Figur 5a, das den ersten Verbindungspartner 12 zeigt, dargestellt.

Figur 5b zeigt den zweiten Verbindungspartner 14, der eine entsprechend ausgebildete Führung 34 als zweiten Kodierungspartner 44 abbildet. Die Führung 34 ist in diesem Beispiel innerhalb der Adapteraufnahme angeordnet.

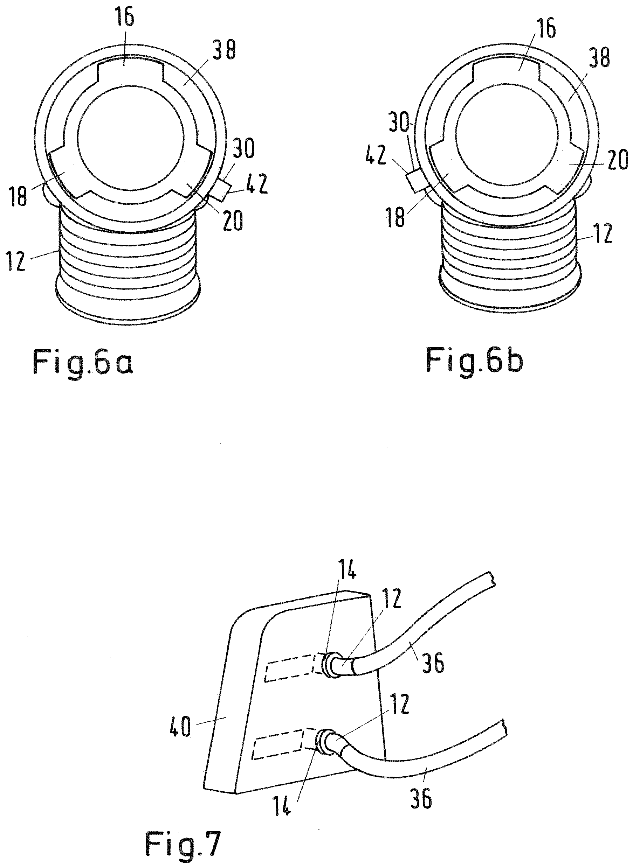

Die Figuren 6a und 6b zeigen die ersten Verbindungspartner 12 von Vorrichtungen 10 eines Vorrichtungssatzes, der eine Vielzahl von Vorrichtungen 10 aufweist. Die Vorrichtung 10 weisen dabei mechanische Kodierungseinrichtungen auf, die sich zwischen den verschiedenen Vorrichtungen 10 unterscheiden.

Dazu ist in Figur 6a der erste Kodierungspartner 42 rechts unten in der Figur als Vorsprung 30 angeordnet.

In Figur 6b ist der erste Kodierungspartner 42 links unten in der Figur als Vorsprung 30 angeordnet.

Figur 2a zeigt in dieser Hinsicht eine weitere Vorrichtung 10 des Vorrichtungssatzes, bei dem der erste Kodierungspartner 42 oben in der Figur als Vorsprung 30 angeordnet ist.

Durch die unterschiedlichen ersten Kodierungspartner 42 der Vorrichtung 10 können die ersten und zweiten Verbindungspartner 12, 14 eindeutig zu einander zugeordnet werden. Damit wird eine Verwechslung verschiedener Verbindungspartner 12, 14, die zu verschiedenen Vorrichtungen 10 gehören, vermieden.

Figur 7 zeigt eine Verteilerplatte 40 für Fluidleitungen und daran mittels Vorrichtungen 10 angeschlossene Fluidleitungen 36. Die Fluidleitungen 36 sind dabei mit den Fluidleitungsadaptern, d. h. den ersten Verbindungspartnern 12 verbunden. Die Verteilerplatte 40 weist die Adapteraufnahmen, d. h. die zweiten Verbindungspartner 14 auf. Die ersten Verbindungspartner 12 sind den zweiten Verbindungspartner 14 mittels der jeweiligen Kodierungseinrichtungen in eindeutiger Weise zugeordnet.

Die Erfindung ist nicht auf eine der vorbeschriebenen Ausführungsformen beschränkt, sondern in vielfältiger Weise entsprechend den angehängten Ansprüchen abwandelbar.

### Bezugszeichenliste

- 10: Vorrichtung
- 12: erster Verbindungspartner
- 14: zweiter Verbindungspartner
- 16: erster Verriegelungsarm
- 18: Verriegelungsarm
- 20: Verriegelungsarm
- 22: Flanschring
- 24: erste Aufnahme
- 26: Aufnahme
- 28: Aufnahme
- 30: Vorsprung
- 32: Rand
- 34: Führung
- 36: Fluidleitung
- 38: Dichtelement
- 40: Verteilerplatte
- 42: erster Kodierungspartner
- 44: zweiter Kodierungspartner
- 46: Umfangsrichtung
- 48: radiale Richtung
- 50: axiale Richtung
- 52: Anschlag
- 54: Fluidleitungskrümmung

## Patentansprüche

1. Vorrichtung zum Kodieren eines ersten Verbindungspartners (12) und eines zweiten Verbindungspartners (14) eines Bajonettverschlusses, wobei die Vorrichtung (10) einen Bajonettverschluss mit einem ersten Verbindungspartner (12) und einem zweiten Verbindungspartner (14) umfasst, wobei der erste Verbindungspartner (12) mindestens zwei Verriegelungsarme (16, 18, 20) zum Verriegeln der Verbindung aufweist und an einem Fluidleitungsadapter angeordnet ist und wobei der zweite Verbindungspartner (14) einen Flanschring (22) zum Durchführen des ersten Verriegelungspartners (12) mit einer der Anzahl der Verriegelungsarmen (16, 18, 20) entsprechenden Anzahl an Ausnehmungen (24, 26, 28) zum Durchführen der Verriegelungsarme (16, 18, 20) aufweist und an einer Adapteraufnahme angeordnet ist, wobei ein erster Verriegelungsarm (16) eine andere Geometrie als die weiteren Verriegelungsarme (18, 20) aufweist, wobei eine dem ersten Verriegelungsarm (16) zugeordnete erste Ausnehmung (24) eine dazu passende Geometrie zum Positionieren des ersten Verbindungspartners (12) und des zweiten Verbindungspartners (14) in einer vordefinierten Position aufweist, und die weiteren Ausnehmungen (26, 28) eine andere, nicht zu dem ersten Verriegelungsarm (16) passende Geometrie aufweisen, und wobei die Vorrichtung (10) weiter eine mechanische Kodierungseinrichtung aufweist, wobei die Kodierungseinrichtung einen ersten Kodierungspartner (42) an dem ersten Verbindungspartner (12) und einen zweiten Kodierungspartner (44) an dem zweiten Verbindungspartner (14) aufweist, wobei der erste Kodierungspartner (42) und der zweite Kodierungspartner (44) zueinander passend ausgerichtet sind, wenn der erste Verbindungspartner (12) und der zweite Verbindungspartner (14) in einer vordefinierten Position zueinander angeordnet sind und eine Verbindung über den Bajonettverschluss bewirkt wird, wobei der erste Kodierungspartner (42) ein Vorsprung (30) ist und der zweite Kodierungspartner (44) eine dem Vorsprung (30) zugeordnete Führung (34) ist, **dadurch gekennzeichnet, dass** der Vorsprung (30) sich in einer radialen Richtung (48) des Fluidleitungsadapters von dem ersten Verbindungspartner (12) weg erstreckt, wobei der zweite Verbindungspartner (14) einen sich in einer Umfangsrichtung (46) der Adapteraufnahme erstreckenden Rand (32) aufweist, der die Führung (34) für den Vorsprung (30) aufweist, wobei die Führung (34) sich in Umfangsrichtung (46) erstreckt.

2. Vorrichtung nach Anspruch 1, **dadurch gekennzeichnet, dass** der erste Verriegelungsarm (16) in einer Umfangsrichtung (46) des Bajonettverschlusses eine größere Erstreckung aufweist als die weiteren Verriegelungsarme (16,18, 20), wobei die erste Ausnehmung (24) eine dazu passende Erstreckung in Umfangsrichtung (46) aufweist und die weiteren Ausnehmungen (24, 26, 28) in Umfangsrichtung (46) eine geringere, nicht zu dem ersten Verriegelungsarm (16) passende Erstreckung aufweisen.

3. Vorrichtung nach einem der Ansprüche 1 oder 2, **dadurch gekennzeichnet, dass** der zweite Kodierungspartner (44) ein Anschlagselement (52) aufweist, das in einer Verriegelungsstellung der Vorrichtung (10) in einer Umfangsrichtung (46) einen Formschluss mit dem Vorsprung (30) bildet.

4. Vorrichtung nach einem der Ansprüche 1 bis 3, **dadurch gekennzeichnet, dass** der erste Verbindungspartner (12) drei Verriegelungsarme (16, 18, 20) aufweist.

5. Vorrichtungssatz umfassend eine Vielzahl von Vorrichtungen (10) nach einem der Ansprüche 1 bis 4, wobei jede Vorrichtung der Vielzahl von Vorrichtungen (10) eine Kodierungseinrichtung aufweist, die sich zur eindeutigen Identifizierung einer Vorrichtung (10) von den Kodierungseinrichtungen der anderen Vorrichtungen der Vielzahl von Vorrichtungen (10) unterscheidet.

6. Vorrichtungssatz nach Anspruch 5, **dadurch gekennzeichnet, dass**, wenn die Fluidleitungsadapter der Vielzahl von Vorrichtungen (10) jeweils eine Fluidleitungskrümmung (54) aufweisen, jede Vorrichtung der Vielzahl von Vorrichtungen (10) eine eigene Winkelbeziehung zwischen der jeweiligen Kodierungseinrichtung und der jeweiligen Fluidleitungskrümmung (54) aufweist.

7. Vorrichtungssatz nach Anspruch 5 oder 6, **dadurch gekennzeichnet, dass** der erste Kodierungspartner (42) einer Vorrichtung der Vielzahl von Vorrichtungen (10) und der zweite Kodierungspartner (44) einer anderen Vorrichtung der Vielzahl von Vorrichtungen (10) inkompatibel sind.

## Claims

1. Apparatus for coding a first connection partner (12) and a second connection partner (14) of a bayonet lock, wherein the apparatus (10) comprises a bayonet lock having a first connection partner (12) and having a second connection partner (14), wherein the first connection partner (12) has at least two locking arms (16, 18, 20) for locking the connection and is arranged on a fluid-line adaptor, and wherein the second connection partner (14) has a flange ring (22) for lead-through of the first locking partner (12) with a number of recesses (24, 26, 28), corresponding to the number of locking arms (16, 18, 20), for lead-through of the locking arms (16, 18, 20) and is arranged on an adaptor receptacle, wherein a first locking arm (16) has a different geometry from the further locking arms (18, 20), wherein a first recess (24) assigned to the first locking arm (16) has a matching geometry for positioning the first connection partner (12) and the second connection partner (14) in a predefined position, and the further recesses (26, 28) have a geometry which is different and does not match the first locking arm (16), and wherein the apparatus (10) furthermore has a mechanical coding device, wherein the coding device has a first coding partner (42) on the first connection partner (12) and has a second coding partner (44) on the second connection partner (14), wherein the first coding partner (42) and the second coding partner (44) are oriented in a manner matching one another when the first connection partner (12) and the second connection partner (14) are arranged in a predefined position in relation to one another and a connection is realized via the bayonet lock, wherein the first coding partner (42) is a projection (30) and the second coding partner (44) is a guide (34) assigned to the projection (30), **characterized in that** the projection (30) extends away from the first connection partner (12) in a radial direction (48) of the fluid-line adaptor, wherein the second connection partner (14) has an edge (32) which extends in a circumferential direction (46) of the adaptor receptacle and which has the guide (34) for the projection (30), wherein the guide (34) extends in the circumferential direction (46).

2. Apparatus according to Claim 1, **characterized in that** the first locking arm (16) has a greater extent in a circumferential direction (46) of the bayonet lock than the further locking arms (16, 18, 20), wherein the first recess (24) has a matching extent in the circumferential direction (46) and the further recesses (24, 26, 28) have an extent in the circumferential direction (46) that is smaller and does not match the first locking arm (16).

3. Apparatus according to either of Claims 1 and 2, **characterized in that** the second coding partner (44) has a stop element (52) which, in a locking position of the apparatus (10), forms a form fit with the projection (30) in a circumferential direction (46).

4. Apparatus according to one of Claims 1 to 3, **characterized in that** the first connection partner (12) has three locking arms (16, 18, 20).

5. Set of apparatuses comprising a multiplicity of apparatuses (10) according to one of Claims 1 to 4, wherein each apparatus of the multiplicity of apparatuses (10) has a coding device which, for the purpose of unique identification of an apparatus (10), differs from the coding devices of the other apparatuses of the multiplicity of apparatuses (10) .

6. Set of apparatuses according to Claim 5, **characterized in that**, if the fluid-line adaptors of the multiplicity of apparatuses (10) each have a fluid-line curved portion (54), each apparatus of the multiplicity of apparatuses (10) has its own angle relationship between the respective coding device and the respective fluid-line curved portion (54) .

7. Set of apparatuses according to Claim 5 or 6, **characterized in that** the first coding partner (42) of one apparatus of the multiplicity of apparatuses (10) and the second coding partner (44) of another apparatus of the multiplicity of apparatuses (10) are incompatible.

## Revendications

1. Dispositif pour coder un premier partenaire de liaison (12) et un deuxième partenaire de liaison (14) d'une fermeture à baïonnette, le dispositif (10) comprenant une fermeture à baïonnette avec un premier partenaire de liaison (12) et un deuxième partenaire de liaison (14), le premier partenaire de liaison (12) présentant au moins deux bras de verrouillage (16, 18, 20) pour verrouiller la liaison et étant agencé sur un adaptateur de conduite de fluide, et le deuxième partenaire de liaison (14) présentant une bague à bride (22) pour le passage du premier partenaire de verrouillage (12) avec un nombre d'évidements (24, 26, 28) correspondant au nombre de bras de verrouillage (16, 18, 20) pour le passage des bras de verrouillage (16, 18, 20) et étant agencé sur un logement d'adaptateur, un premier bras de verrouillage (16) présentant une géométrie différente de celle des autres bras de verrouillage (18, 20), un premier évidement (24) associé au premier bras de verrouillage (16) présentant une géométrie adaptée à celui-ci pour positionner le premier partenaire de liaison (12) et le deuxième partenaire de liaison (14) dans une position prédéfinie, et les autres évidements (26, 28) présentant une géométrie différente, non adaptée au premier bras de verrouillage (16), et le dispositif (10) présentant en outre un appareil de codage mécanique, l'appareil de codage présentant un premier partenaire de codage (42) sur le premier partenaire de liaison (12) et un deuxième partenaire de codage (44) sur le deuxième partenaire de liaison (14), le premier partenaire de codage (42) et le deuxième partenaire de codage (44) étant alignés de manière à s'adapter l'un à l'autre lorsque le premier partenaire de liaison (12) et le deuxième partenaire de liaison (14) sont agencés dans une position prédéfinie l'un par rapport à l'autre et une liaison est effectuée par l'intermédiaire de la fermeture à baïonnette, le premier partenaire de codage (42) étant une saillie (30) et le deuxième partenaire de codage (44) étant un guide (34) associé à la saillie (30), **caractérisé en ce que** la saillie (30) s'étend dans une direction radiale (48) de l'adaptateur de conduite de fluide en s'éloignant du premier partenaire de liaison (12), le deuxième partenaire de liaison (14) présentant un bord (32) s'étendant dans une direction circonférentielle (46) du logement d'adaptateur, qui présente le guide (34) pour la saillie (30), le guide (34) s'étendant dans la direction circonférentielle (46) .

2. Dispositif selon la revendication 1, **caractérisé en ce que** le premier bras de verrouillage (16) présente, dans une direction circonférentielle (46) de la fermeture à baïonnette, une extension plus grande que les autres bras de verrouillage (16, 18, 20), le premier évidement (24) présentant une extension adaptée à celui-ci dans la direction circonférentielle (46) et les autres évidements (24, 26, 28) présentant dans la direction circonférentielle (46) une extension plus petite, non adaptée au premier bras de verrouillage (16).

3. Dispositif selon l'une quelconque des revendications 1 ou 2, **caractérisé en ce que** le deuxième partenaire de codage (44) présente un élément de butée (52) qui, dans une position de verrouillage du dispositif (10), forme une liaison par complémentarité de forme avec la saillie (30) dans une direction circonférentielle (46) .

4. Dispositif selon l'une quelconque des revendications 1 à 3, **caractérisé en ce que** le premier partenaire de liaison (12) présente trois bras de verrouillage (16, 18, 20).

5. Jeu de dispositifs comprenant une pluralité de dispositifs (10) selon l'une quelconque des revendications 1 à 4, chaque dispositif de la pluralité de dispositifs (10) présentant un appareil de codage qui diffère des appareils de codage des autres dispositifs de la pluralité de dispositifs (10) pour identifier de manière unique un dispositif (10).

6. Jeu de dispositifs selon la revendication 5, **caractérisé en ce que**, lorsque les adaptateurs de conduite de fluide de la pluralité de dispositifs (10) présentent chacun une courbure de conduite de fluide (54), chaque dispositif de la pluralité de dispositifs (10) présente une relation angulaire distincte entre l'appareil de codage respectif et la courbure de conduite de fluide respective (54).

7. Jeu de dispositifs selon la revendication 5 ou 6, **caractérisé en ce que** le premier partenaire de codage (42) d'un dispositif de la pluralité de dispositifs (10) et le deuxième partenaire de codage (44) d'un autre dispositif de la pluralité de dispositifs (10) sont incompatibles.
